# EUROPEAN PATENT APPLICATION

(11) **EP 4 617 915 A1**
(43) Date of publication of application: **17.09.2025**
(21) Application number: 23888138.7
(22) Date of filing: 10.11.2023
(51) Int. Cl.: G06F 16/9536

(54) **METHOD AND APPARATUS FOR USER INTERACTION, AND DEVICE AND STORAGE MEDIUM**

(30) Priority: 10.11.2022 CN 202211406907
(71) Applicant: Beijing Zitiao Network Technology Co., Ltd., Beijing 100190 (CN)
(72) Inventor: LI, Linxing, Beijing 100028 (CN)
(74) Representative: Grünecker Patent- und Rechtsanwälte PartG mbB
(86) International application number: PCT/CN2023/131119
(87) International publication number: WO 2024/099453

(57) **Abstract**

Embodiments of the present disclosure provide a method, an apparatus, a device, and a storage medium for user interaction. The method includes: presenting, in a feed recommendation page, a plurality of interactable interface elements associated with a predetermined event; detecting a selection of at least one interface element in the plurality of interactable interface elements by a current user; and in response to detecting the selection of at least one interface element in the plurality of interactable interface elements by the current user, highlighting the selected at least one interface element. According to embodiments of the present disclosure, by presenting a page having an interactable interface element in a feed recommendation page, an interaction channel of a user can be enriched, and promotion of a predetermined event can be facilitated.

## Description

This application claims priority to Chinese Patent Application No. 202211406907.9, filed on November 10, 2022 and entitled "METHOD, APPARATUS, DEVICE AND STORAGE MEDIUM FOR USER INTERACTION", which is incorporated herein by reference in its entirety.

### FIELD

Example embodiments of the present disclosure generally relate to the field of computers, and more particularly, to a method, apparatus, device, and computer-readable storage medium for user interaction.

### BACKGROUND

Currently, there are more and more applications, websites, and other applications that enable a user to interact with others and share information on a network. More and more applications and websites provide media content sharing modules such as short videos, images, etc. For example, through a media content sharing module, a user may share media content shot or created by himself/herself, and may also view content shared by other users on a feed recommendation page.

### SUMMARY

In a first aspect of the disclosure, a method for user interaction is provided. The method includes: presenting a plurality of interactable interface elements associated with a predetermined event in a feed recommendation page; detecting selection of at least one interface element of the plurality of interactable interface elements by the current user; and in response to detecting selection of at least one interface element of the plurality of interactable interface elements by the current user, highlighting the selected at least one interface element.

In a second aspect of the present disclosure, there is provided an apparatus for user interaction. The apparatus includes: a first presentation module configured to present a plurality of interactable interface elements associated with a predetermined event in a feed recommendation page; a detection module configured to detect a selection of at least one interface element of a plurality of interactable interface elements by a current user; and a highlighting display module configured to highlight, in response to detecting a current selection of at least one interface element among the plurality of interactable interface elements by the user, the selected at least one interface element.

In a third aspect of the present disclosure, there is provided an electronic device. The device includes at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the disclosure, there is provided a computer readable storage medium. The medium has a computer program stored thereon which, when executed by a processor, implements the method of the first aspect.

It should be appreciated that what is described in this Summary is not intended to limit the critical features or essential features of the embodiments of the disclosure, nor is it intended to limit the scope of the disclosure. Other features of the present disclosure will become readily appreciated from the following description.

### BRIEF DESCRIPTION OF THE DRAWINGS

The above and other features, advantages, and aspects of various embodiments of the present disclosure will become more apparent with reference to the following detailed description taken in conjunction with the accompanying drawings. In the drawings, the same or similar reference signs denote the same or similar elements, wherein:
FIG. 1 illustrates a schematic diagram of an example environment in which embodiments of the present disclosure can be implemented;
FIG. 2 illustrates a flowchart of a process for user interaction according to some embodiments of the disclosure;
FIGS. 3A-3I illustrate schematic views of example pages related to user interactions according to some embodiments of the present disclosure;
FIG. 4 illustrates a block diagram of an apparatus for user interaction according to some embodiments of the disclosure; and
FIG. 5 illustrates an electronic device in which one or more embodiments of the present disclosure may be implemented.

### DETAILED DESCRIPTION

Embodiments of the present disclosure will be described in more detail below with reference to the accompanying drawings. Although certain embodiments of the present disclosure are shown in the accompanying drawings, it should be understood that the present disclosure may be implemented in various forms and should not be construed as limited to the embodiments set forth herein, but rather, these embodiments are provided for a thorough and complete understanding of the present disclosure. It should be understood that the drawings and embodiments of the present disclosure are only for illustrative purposes but are not intended to limit the scope of the present disclosure.

In the description of the embodiments of the present disclosure, the term "including" and the like should be understood as open-ended including, that is, "including but not limited to". The term "based on" should be read as "based at least in part on". The term "one embodiment" or "the embodiment" should be read as "at least one embodiment". The term "some embodiments" should be understood as "at least some embodiments". Other explicit and implicit definitions may also be included below.

Herein, unless explicitly stated, "performing a step in response to A" does not mean that the step is performed immediately after "A", but one or more intermediate steps may be included.

It will be appreciated that the data involved in the technique solution (including but not limited to the data itself, the obtain, or use of the data) should comply with the requirements of the corresponding legal regulations and related provisions.

It should be understood that, before the technical solutions disclosed in the embodiments of the present disclosure are used, users should be of the type, application scope, and application scenario of the personal information involved in this disclosure in an appropriate manner and the user's authorization shall be obtained, in accordance with relevant laws and regulations.

For example, in response to receiving an active request from a user, prompt information is sent to the user to explicitly prompt the user that the operation requested to be performed will require acquiring and using personal information of the user, so that the user may autonomously select, according to prompt information, whether to provide personal information to software or hardware such as an electronic device, an application, a server, or a storage medium that executes the operation of the technical solutions of the present disclosure.

As an optional but non-limiting implementation, in response to receiving an active request of a user, prompt information is sent to the user, for example, in the form of a pop-up window, and the pop-up window may present the prompt information in the form of text. In addition, the pop-up window may also carry a selection control for the user to select whether he/she "agrees" or "disagrees" to provide personal information to the electronic device.

It should be understood that the above notification and user authorization process are only illustrative which do not limit the implementation of this disclosure. Other methods that meet relevant laws and regulations may also be applied to the implementation of this disclosure.

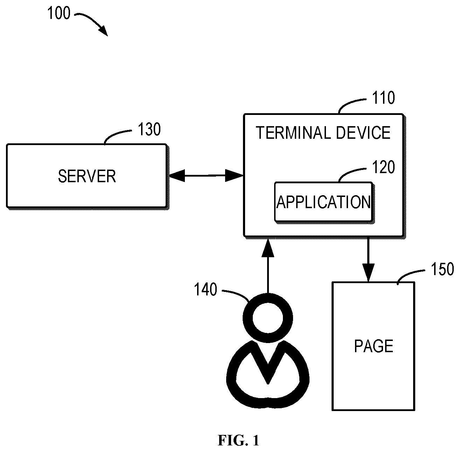

FIG. 1 illustrates a schematic diagram of an example environment 100 in which embodiments of the present disclosure can be implemented. In this example environment 100, an application 120 is installed in a terminal device 110. The user 140 may interact with the application 120 via the terminal device 110 and/or an attachment device of the terminal device 110. In some embodiments, the application 120 may be a social application, such as a content sharing application. The application 120 may be capable of providing one or more services related to media content, including creating, publishing, browsing, commenting, forwarding media content, etc., to user 140. Herein, the "media content" includes one or more types of content, such as images, image sets, videos, motion graphics, audio, text, etc.

In the environment 100 of FIG. 1, if the application 120 is in an active state, the terminal device 110 may present a page 150 of the application 120. The page 150 may include various types of pages that the application 120 may provide, such as a feed recommendation page, a personal home page, a detail page of media content, a content creating page, a content publishing page, a messages page, etc. The application 120 may provide content creation functionality including shooting, uploading, editing, and/or publishing media content including live content.

In some embodiments, the terminal device 110 communicates with the server 130 to enable the provision of services to the application 120. The terminal device 110 may be any type of mobile terminal, fixed terminal, or portable terminal including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a game device, or any combination of the foregoing, including accessories and peripherals for these devices, or any combination thereof. In some embodiments, the terminal device 110 may also support any type of interface to a user (such as "wearable" circuitry, etc.). The server 130 may be various types of computing systems/servers capable of providing computing capabilities including, but not limited to, mainframe computers, edge computing nodes, computing devices in a cloud environment, etc.

It should be understood that the structure and function of the various elements in environment 100 are described for the purpose of example only, and are not intended to imply any limitation on the scope of the disclosure.

In order to facilitate users to browse media contents shared by other users, more and more applications, websites, and the like have provided feed recommendation pages. On a feed recommendation page, a user may browse media content shared by himself/herself and other users. However, current feed recommendation pages generally may only push media content, such as short videos or pictures, published by other users, and these media content do not have interactable interface elements, thereby limiting the promotion of some large competitions or even applications or websites themselves.

According to an embodiment of the present disclosure, a method for user interaction is provided. According to the method in the embodiment of the present disclosure, content items of a plurality of interactable interface elements may be presented in a feed recommendation page. A user may perform interaction on a plurality of interactable interface elements on a page, thereby enriching the interaction channels of the user and facilitating promotion of some predetermined events such as large-scale competitions.

Some example embodiments of the present disclosure will be described below with continued reference to the accompanying drawings.

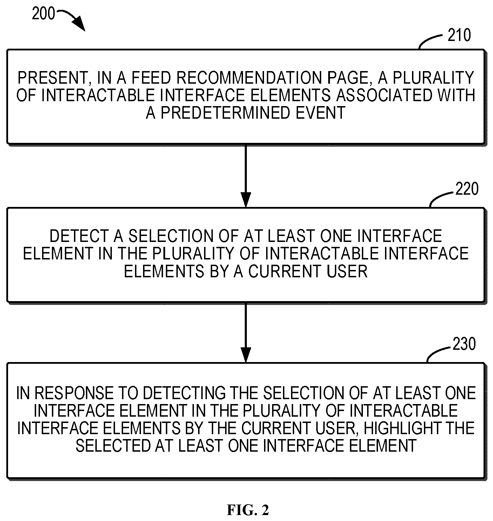

FIG. 2 illustrates a flowchart of a process 200 for user interaction according to some embodiments of the disclosure. The process 200 may be implemented at terminal device 110. For ease of discussion, the process 200 will be described with reference to the environment 100 of FIG. 1.

At block 210, the terminal device 110 presents, in a feed recommendation page, a plurality of interactable interface elements associated with a predetermined event.

The feed recommendation page refers to a page corresponding to feed recommendation stream. The feed recommendation stream may be understood as a media information outlet of an application or a website and the like, and provides personalized customized content for a user. The user may switch among different feed recommendation pages for feeding the recommendation stream by, for example, sliding up and down on the display of the terminal device. The user may enter the feed recommendation page by selecting a tab such as "recommend" or "feed" in the presented user interface.

A "predetermined event" herein may refer to an event having one or more parties involved, including, but not limited to, various of competitions, such as, a sporting competition, a gaming competition, talent contests, various online and offline activities, and the like. In some embodiments, the predetermined event may refer to an event involving a plurality of parties (e.g., a plurality of football teams of a game), such as a sporting competition of a football game or the like. The concept according to the present disclosure will be described below mainly taking a sporting competition as an example of a predetermined event, and it should be understood that it may also be applied to the case of other predetermined events having a plurality of parties, which will not be described in detail below.

In some embodiments, the predetermined event may include a plurality of small events. For example, for a predetermined event such as a football competition, a plurality of small events such as a group game, a kick-out game, etc. may be included. In some embodiments, a predetermined event herein may also refer to a small event in a large-scale game that includes at least two parities.

According to embodiments of the present disclosure, a user may receive a content item including a plurality of interactable interface elements while browsing a feed recommendation page (such as a short video or a picture set) pushed by other users in the feed recommendation stream. Unlike non-interactable recommendation content generally presented in a feed recommendation stream, a content item containing an interactable interface element is intended to provide an interaction path with a user, so as to improve the user's interest in a specific event by improving the interaction interest, thereby achieving the recommendation breadth and depth of the specific event.

In some embodiments, a plurality of interactable interface elements may be associated with a predetermined event, e.g., indicating various aspects in the predetermined event. In some embodiments, a plurality of interactable interface elements may be associated with multiple parties involved in a predetermined event. "Be associated with" may represent a variety of meanings. In some embodiments, "Be associated with" may represent that an interactable interface element includes information about a plurality of parties involved in a predetermined event. In some embodiments, alternatively or additionally, "be associated with" may also indicate issues such as win, tie, lose, goal counts, scores, and the like relating to the process and outcome of an confrontation event between a plurality of parties involved in the predetermined event. Of course, it should be understood that "be associated with" may also include any other appropriate circumstance other than the foregoing two circumstances, which will not be described in detail hereinafter. For a specific event, a plurality of interactable interface elements may be involved for user interaction.

The interactable interface element may represent an interface element that a user may operate in a manner of clicking, sliding, hovering, or the like to complete interaction. The visual style of the interface elements may be customized, for example, visual styles such as buttons, sliders, text blocks, and the like may be employed. In some embodiments, visual elements related to a plurality of parties may be presented on the interface elements, including, for example, text and names corresponding to the plurality of parties, and landmark, team flag, or flag color with indicia, etc. In some embodiments, the interface elements may also include elements such as win, tie, lose, goal count, and score of a game of at least two parties. Various visual styles of the interactable interface elements, including shape, size, background pattern, color, etc., may be customized.

In some embodiments, a page having a plurality of interactable interface elements as described above may be presented only after a user logs in within an application or website. If the user does not log in, but accesses the feed recommendation stream anonymously, the page having the plurality of interactable interface elements may not be pushed. After the user has logged in, a feed recommendation page having a plurality of interactable interface elements may be pushed according to the browsing habits or preferences of the user. For example, if it is determined that the user's preference is sports content, such as football, the logged-in user may be pushed a feed recommendation page having a plurality of interactable interface elements related to large-scale competition. If it is determined that the user's preference is entertainment content such as a singing contest, a feed recommendation page having a plurality of interactable interface elements associated with a singing contest, for example, may be pushed to these logged-in users.

After presenting a plurality of interactable interface elements associated with the parties involved in the predetermined event, at block 220, the terminal device 110 detects a selection of at least one interface element in the plurality of interactable interface elements by a current user.

In some embodiments, a user's selection on the plurality of interactable interface elements associated with a predetermined event may be set as a single selection, such that the user no longer alters the selection after one selection. As such, the terminal device 110 may determine whether a selection of at least one interface element in the plurality of interactable interface elements was previously received from the current user. If the selection of at least one interactable interface element in the plurality of interactable interface elements was previously received from the current user, when these interactable interface elements are presented this time, the terminal device 110 may detect the current user's selection of at least one interactable interface element in the plurality of interactable interface elements. That is, it may be determined whether the current user has previously selected for at least one interface element in the plurality of interface elements (such a selection may be recorded by the terminal device 110 or a server of the application/website). If it is determined that the current user has not selected at least one interface element in the plurality of interface elements, the terminal device 110 detects the selection of at least one interface element in the plurality of interface elements by the current user. For example, the user may select a corresponding interface element by clicking, sliding a finger, hovering, or the like.

In some embodiments, a user selection of a plurality of interactable interface elements associated with a predetermined event may be set as a plurality of selections or an unlimited number of selections. Each time the plurality of interactable interface elements are presented, the terminal device 110 may detect the selection of at least one interface element in the plurality of interface elements by the current user.

After the user makes the selection, at block 230, in response to detecting the selection of the at least one interface element in the plurality of interactable interface elements, the terminal device 110 highlights the selected at least one interface element. In some embodiments, the highlighting may include highlighting the selected at least one interface element in an appropriate manner. These suitable manners include, but are not limited to, at least one of enlarging, blinking, color-changing at least a portion of the at least one interface element, etc. These will be further illustrated hereinafter by specific examples.

In some embodiments, the selection of at least one interface element by the current user may be recorded, for example, on a server. In some embodiments, before the server pushes the feed recommendation page having a plurality of interactable interface elements to terminal device 110, it may be first determined whether an interactable interface element associated with a predetermined event has previously been pushed to the current user, and whether the user selected at least one interface element and was recorded. If the user who has logged in the terminal device 110 has browsed the feed recommendation page and selected at least one interactable interface element in the plurality of interactable interface element, and the selection is recorded, the server may no longer push the feed recommendation page to such terminal device 110. Of course, it should be understood that, in some embodiments, the selection being recorded may also be that the selection is locally recorded by the terminal device 110 in advance, and then transmitted to the server at an appropriate time.

In some alternative embodiments, the server may also continue to push a corresponding feed recommendation page to the terminal device 110 if presentation of the foregoing plurality of interactable interface elements has been received from the current user and the selection of and recording of the interactable interface element therein has been made. In such embodiments, in response to the selection of at least one interface element in the plurality of interactable interface elements being received previously from the current user, the selected at least one interface element may be highlighted and the interactability of the plurality of interactable interface elements is disabled. That is, while these interface elements are presented to the user again, the user's previous selection is directly highlighted, thus the user cannot select one or more interface elements in the plurality of interactable interface elements again.

In some embodiments, if the user still attempts to select an interactable interface element by clicking on the interactable interface element while the interactable interface element is disabled, the terminal device 110 may present a corresponding prompt to the user to indicate to the user that he/she has selected, or that she/he has made a prediction, and thus cannot perform selection or prediction anymore. This will be explained further below.

In some embodiments, if multiple or unlimited selections of the plurality of interactable interface elements by a user is supported, in response to detecting a selection of at least one interface element in the plurality of interactable interface elements by the current user, and a selection of at least one additional interface element in the plurality of interactable interface elements being received previously from the current user, the terminal device 110 may provide a re-acknowledgment request for the selection of the at least one interface element. In some embodiments, the reconfirmation request may also indicate at least one additional interface element previously selected by the current user, and the user is requested to confirm whether to alter the selection. If re-confirmation of at least one interface element selected this time is detected (i.e., the user confirms changing the selection), the terminal device 110 may highlight the at least one interface element selected this time. In some embodiments, if the user has previously selected one or more interface elements, the previously selected interface elements may first be highlighted but the interactivity of the plurality of interactable interface elements is not disabled, so as to allow the user to select again. In this way, the selection may be flexibly confirmed and changed by the user as required.

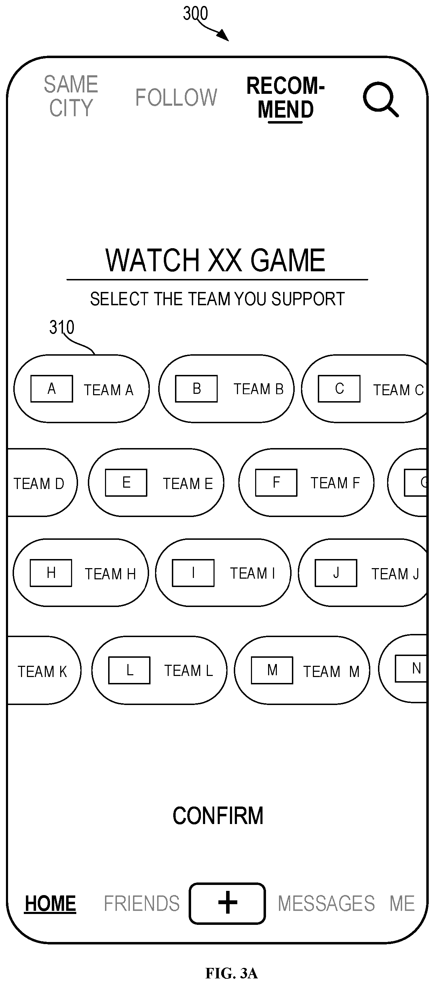

As an example, FIG. 3A illustrates an example feed recommendation page 300 of an application. In this example feed recommendation page 300, a plurality of interactable interface elements 310 associated with a plurality of teams involved in a large football game are presented. If the plurality of interactable interface elements 310 to be presented cannot be presented in a single display interface, all of these interactable interface elements 310 may be presented in a manner of moving or floating in the display interface. In an example shown in FIG. 3A, a plurality of team flags are customized on the interactable interface element 310, respectively, to facilitate user recognition and selection. The user may select a team (also referred to as "home team") that he or she supports through the example feed recommendation page 300 shown in FIG. 3A.

It should be understood that the examples of such interactable interface elements 310 shown in FIG. 3A are merely illustrative and are not intended to limit the scope of the present disclosure. As mentioned previously, the interactable interface element 310 may have any suitable form.

Some of the interactable interface elements 310 may be randomly displayed with changes of visual effects before these interactable interface elements 310 are selected by a user. For example, in some embodiments, some interactable interface elements 310 may be randomly enlarged and reduced in small magnitude so as to enable a user to understand that these interactable interface elements 310 may be selected.

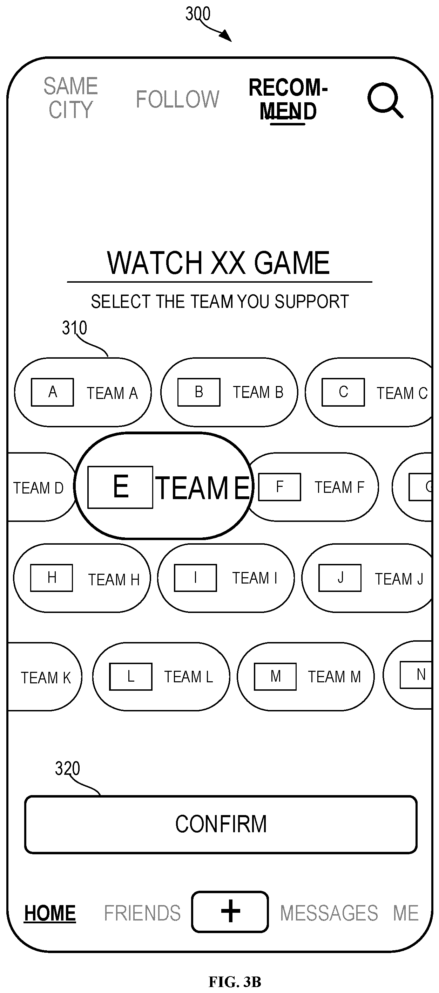

In some embodiments, the selection being recorded may include recording that the current user supported at least one party associated with the selected at least one interface element 310 in the predetermined event. For example, as shown in FIG. 3B, when the user selects one of the teams indicated by these interactable interface elements 310 in an appropriate manner, i.e., selects one team as the home team, the selected interactable interface element 310 will be highlighted in an enlarged manner. This highlighting indicates that the user has selected the interactable interface element 310, i.e., the team associated with the interactable interface element 310 is selected as the home team. At the same time, a confirmation or submission button 320 at an appropriate page on the page is activated, which facilitate the user to click and thereby record the user's selection.

Of course, in some alternative embodiments, the button 320 or other interface elements for confirmation or submission may also be presented in a pop-up window. In some alternative embodiments, there may also be no confirmation or submission button; instead, after a predetermined amount of time has elapsed from the time when the interactable interface element 310 is selected by the user and is highlighted but there is no other selection, then the selection by the user is automatically recorded.

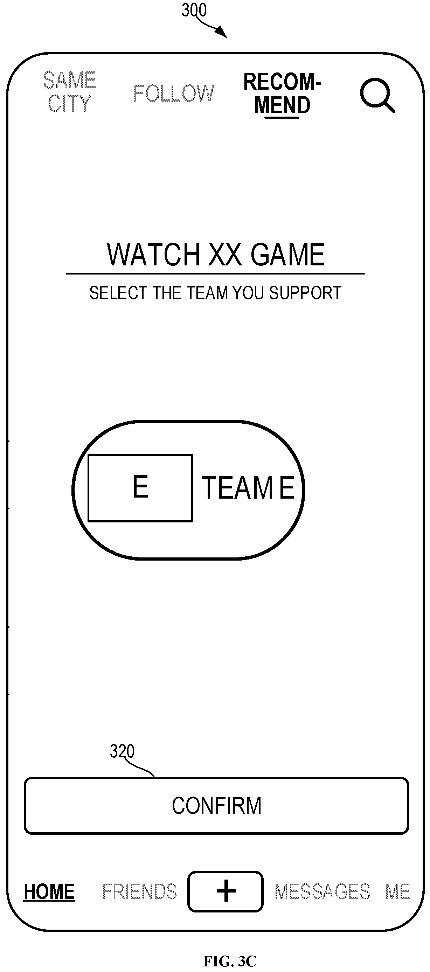

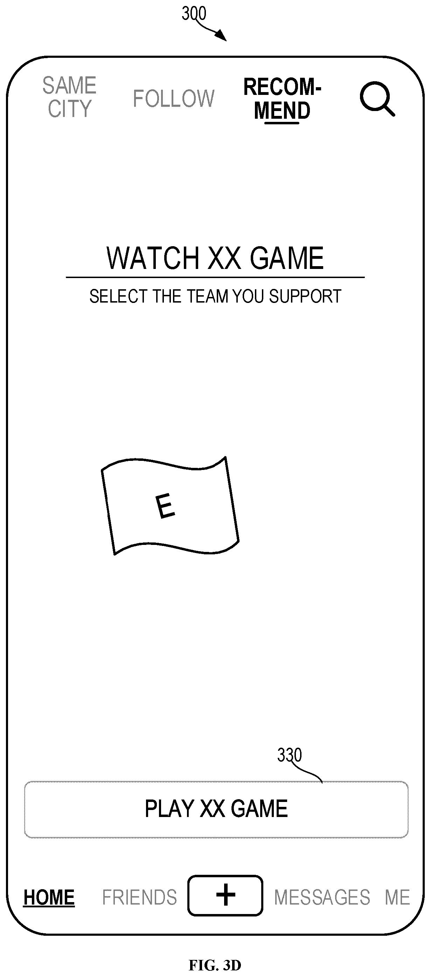

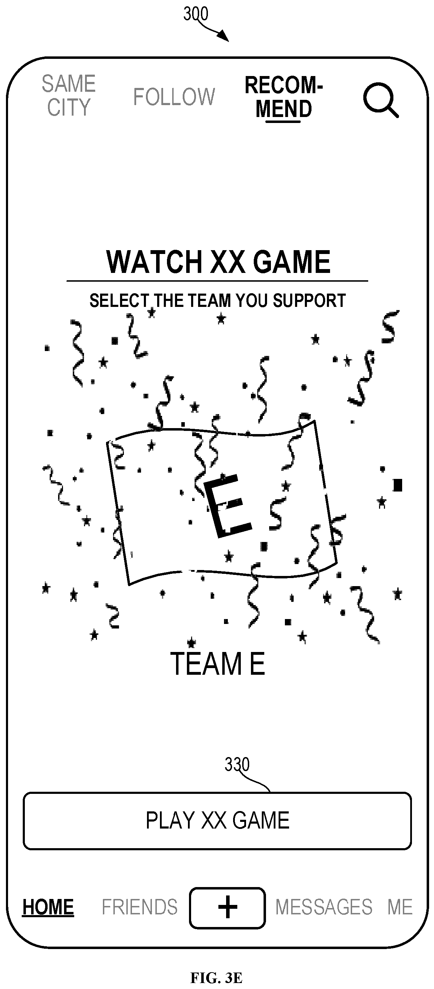

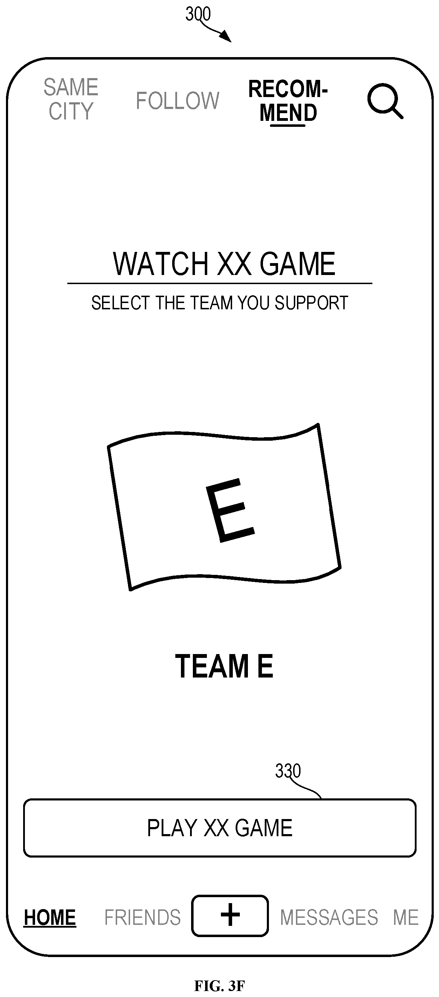

After the user's selection is recorded, in some embodiments, in response to detecting the selection of at least one interface element 310 in the plurality of interactable interface elements 310, the terminal device 110 may play multimedia content associated with the at least one interface element. For example, as shown in FIG. 3C, FIG. 3D, FIG. 3E, and FIG. 3F, after the user determines a selection of one interface element 310 (e.g., interface element "E team E"), the terminal device 110 begins to present multimedia content corresponding to the team (e.g., team E) associated with the selected interface element 310. For example, the team flag shown in the interface element 310 may be continuously enlarged for display, and a dynamic effect of flutter may be finally presented. In addition, effects such as ribbons, fireworks and the like may also be presented at an appropriate position in the interface, accompanied by cheering sounds effect, thereby further optimizing the user experience. It should be noted that, the multimedia content herein may be configured according to an actual application, which is not limited in the embodiment of the present disclosure.

In some embodiments, an entry interface element 330 associated with the event may also be presented at an appropriate time, such as a button or label with a typeface such as "Play XX Game" or "Go XX Game" is displayed. In response to receiving a selection of entry interface element 330 (e.g., a user clicking on the entry interface element), the terminal device 110 may present a page associated with the event. For example, as shown in FIGS. 3E and 3F, when the user selects at least one interactable interface element 310 and plays multimedia content corresponding to the team associated with the interactable interface element 310, a button of "Play XX Game" may be presented at an appropriate position (e.g., bottom) of the page. The user may select the entry interface element 330 indicated by the button by clicking the button, so that the terminal device 110 may present a five steaming page associated with the event, for example, presenting an introduction page of a home team. In this way, promotion of a predetermined event may be facilitated, and interested users may be facilitated to gain further insight into the predetermined event.

An example of a feed recommendation page 300 with which the user selects his/her home team (which may also be referred to as "home team play") is described above with respect to FIGS. 3A-3F. Such an example feed recommendation page 300 may be pushed to the user throughout the course of an event (e.g., an XX game). In addition, in some embodiments, the feed recommendation page 300 may alternatively or additionally include a page for "prediction play". For example, it was mentioned in the foregoing that in a predetermined event such as a large-scale football competition, a plurality of small games (e.g., kick out or points games, etc.) are included. For example, multiple interactable interface elements 310 presented in the feed recommendation page 300 for "prediction play" may be associated with both of the two parties of the predetermined events for such a small game.

In particular, in some embodiments, the plurality of interactable interface elements 310 presented by the feed recommendation page 300 may include interactable interface elements for at least two parties having a confrontation in an event, and detecting the selection of at least one interface element 310 in the plurality of interactable interface elements 310 may include selection of an interactable interface element 310 associated with a first party of the two parties. In some embodiments, in response to the user's selection, the current user prediction of the first party in the confrontation is recorded.

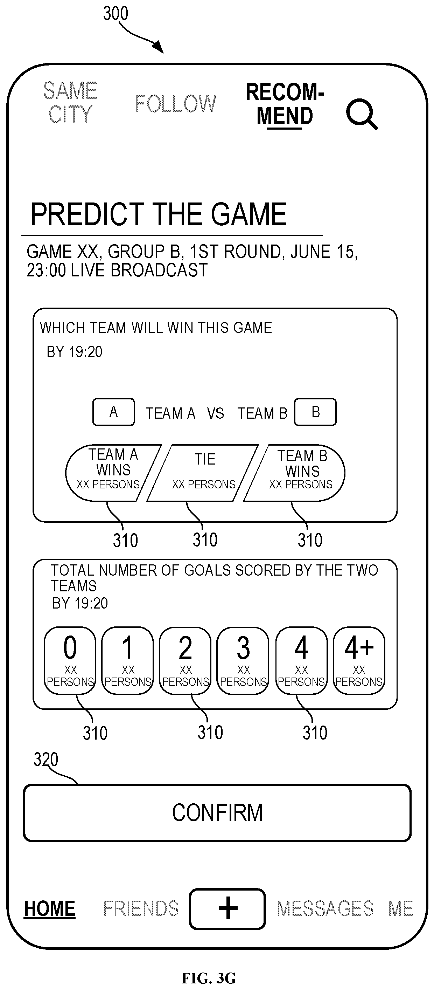

For example, as shown in FIG. 3G, prior to a certain game in a large football game, the feed recommendation page 300 may include a plurality of interactable interface elements 310 associated with two teams in the game (Team A and Team B), such as, "Team A win", "tie", and "Team B win", so that the user may record, through selection of these interactable interface elements 310, which party the current user is predicting to have an advantage in the confrontation of the game.

Herein, the team A and the team B may be one of the supported teams selected by the user (i.e., the home team), or may be other teams. By selecting one interface element 310 from the presented plurality of interactable interface elements 310, for example, if the user selects "the home team A wins', the user may record that the current user predicts that the home team A has an advantage in this game.

As shown in FIG. 3G, in some embodiments, alternately or additionally, the plurality of interactable interface elements 310 may also include some options regarding the total the total number of goals scored by two teams, such as "0", "1", " 2", "3", "4", and "4+" etc. The user may select the total number of goals for the two teams in the game by selecting the corresponding interactable interface element 310, so that a prediction may be made on the total number of goals for the two teams in the game.

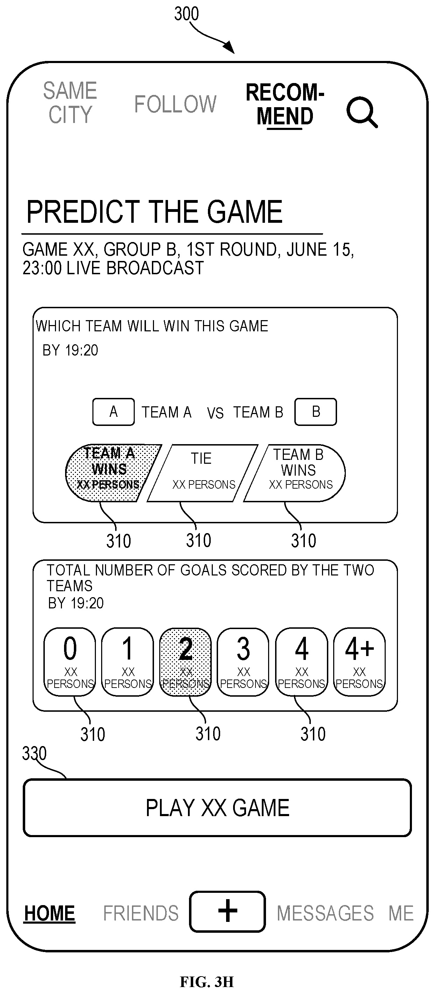

When the user selects the corresponding interface element 310, for example, "Home team A wins" and total number of goals "2", the corresponding interface element 310 will be highlighted and will be finally recorded (for example, by the user clicking the confirm button 320 or no other operation for a predetermined period of time), as shown in FIG. 3H. If the user receives a feed recommendation page 300 including the interactable interface elements 310 again before the game, the selection made previously by the user may be highlighted directly and the interactability of the interactable interface elements 310 is disabled.

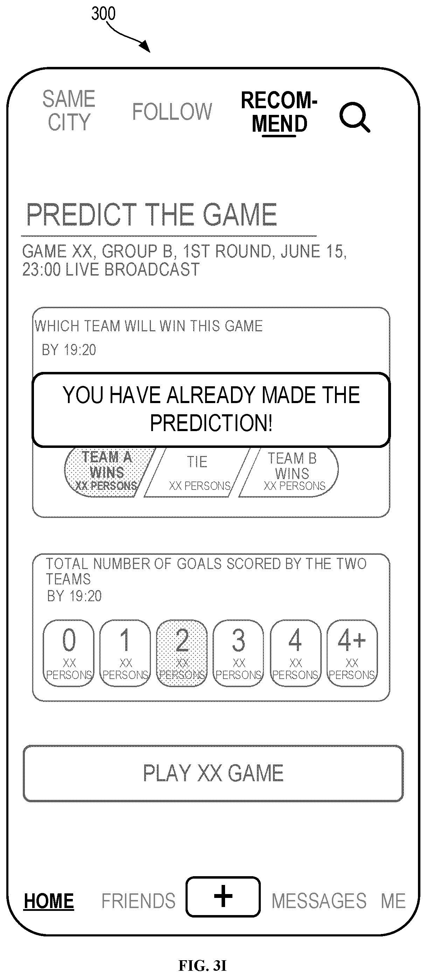

If the user is still operating these interactable interface elements 310 while the interactivity of the interactable interface elements 310 is disabled, a prompt such as "you have made a prediction" may be presented to the user to indicate that the user has made a prediction and there is no need to make a prediction again, as shown in FIG. 3I.

**Of** course, in some embodiments, if the user is allowed to make a plurality of selections, the interactivity of the interactable interface element 310 will not be disabled, but the user is allowed to change the interface element to be selected again.

In addition, similar to the feed recommendation page 300 of "home team play", in the feed recommendation page 300 of "prediction play", an entry interface element 330 associated with the event may also be presented, such as a button or label displayed with a typeface of "enter the scene of the game" or "play XX game", and in response to receiving a selection of the entry interface element 330, a page associated with the event is presented. In this way, promotion of a predetermined event may be facilitated, and be facilitated to gain further insight into the predetermined event.

According to embodiments of the present disclosure, by presenting a page having an interactable interface element in a feed recommendation page, an interaction channel of a user may be enriched, and promotion of a predetermined event may be facilitated.

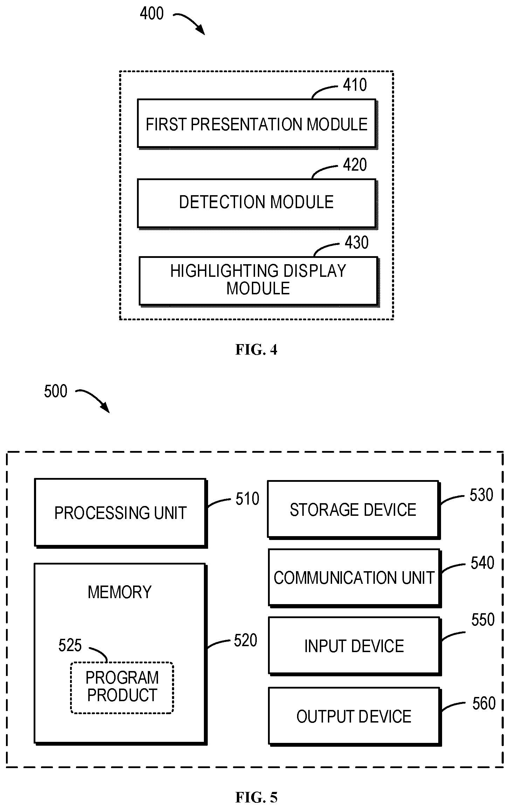

FIG. 4 illustrates a schematic structural block diagram of an apparatus 400 for user interaction according to some embodiments of the disclosure. The apparatus 400 may be implemented as or included in a terminal device 110. The various modules/components in the apparatus 400 may be implemented by hardware, software, firmware, or any combination thereof. For ease of understanding, the following will be described in conjunction with the examples of FIGS. 3A-3I.

The apparatus 400 includes a first presentation module 410 configured to present, in the feed recommendation page 300a, a plurality of interactable interface elements 310 associated with a predetermined event. The apparatus 400 also includes a detection module 420 configured to detect a selection of at least one interface element 310 in the plurality of interactable interface elements 310 by a current user. The apparatus 400 further includes a highlighting display module 430 configured to highlight, in response to detecting the selection of at least one interface element in the plurality of interactable interface elements 310 by the current user, the selected at least one interface element.

In some embodiments, the detection module 420 includes a selection-based detection module configured to detect, in response to a selection of at least one interface element in the plurality of interactable interface elements being received previously from the current user, the selection of at least one interface element in the plurality of interactable interface elements.

In some embodiments, the apparatus 400 may also include a disabling module configured to, in response to the selection of at least one interface element 310 in the plurality of interactable interface elements 310 being received previously from the current user, highlight the selected at least one interface element 310; and disable interactability of the plurality of interactable interface elements 310.

In some embodiments, the highlighting display module 430 includes a selection-based request providing module configured to, in response to detecting the selection of at least one interface element in the plurality of interactable interface elements by the current user, and the selection of at least one further interface element in the plurality of interactable interface elements being received previously from the current user, provide a re-confirmation request for the selection of the at least one interface element; and a confirmation-based highlighting display module configured to highlight the selected at least one interface element in response to detecting a re-confirmation on the selection of the at least one interface element.

In some embodiments, the apparatus 400 may further include a playback module configured to play, in response to detect the selection of at least one interface element 310 in the plurality of interactable interface elements 310, multimedia content associated with the selected at least one interface element 310, at least one of which is associated with the selected at least one interface element 310.

In some embodiments, the apparatus 400 may further include: a second presentation module configured to present an entry interface element 330 associated with the predetermined event; and a third presentation module configured to present a page associated with the event in response to receiving the selection of the entry interface element 330.

In some embodiments, the plurality of interactable interface elements 310 include interactable interface elements 310 associated with respective parties involved in the predetermined event. In some embodiments, the apparatus 400 further includes a first record module configured to record that the current user supports at least one party associated with the selected at least one interface element 310 in the predetermined event.

In some embodiments, the plurality of interactable interface elements 310 include interactable interface elements associated with at least two parties having a confrontation in the predetermined event. In some embodiments, the detection module 420 is configured to detect a selection of an interactable interface element associated with a first party of the at least two parties. In some embodiments, the apparatus 400 further includes a second recording module configured to record that the current user predicts that the first party has an advantage in the confrontation.

FIG. 5 illustrates a block diagram of an electronic device 500 in which one or more embodiments of the present disclosure may be implemented. It should be appreciated that the electronic device 500 shown in FIG. 5 is merely an example and should not be considered as any limitation on the functionality and scope of the embodiments described herein. The electronic device 500 shown in FIG. 5 may be used to implement the terminal device 110 of FIG. 1 and/or the apparatus 400 of FIG. 4.

As shown in FIG. 5, the electronic device 500 is in the form of a general-purpose electronic device. Components of the electronic device 500 may include, but are not limited to, one or more processors or processing units 510, a memory 520, a storage device 530, one or more communications units 540, one or more input devices 550, and one or more output devices 560. The processing unit 510 may be an actual or virtual processor and may perform various processes according to programs stored in the memory 520. In a multiprocessor system, a plurality of processing units execute computer executable instructions in parallel, so as to improve the parallel processing capability of the electronic device 500.

The electronic device 500 typically includes several computer storage media. Such media may be any available media that are accessible by electronic device 500, including, but not limited to, volatile and non-volatile media, removable and non-removable media. The memory 520 may be a volatile memory (e.g., a register, cache, random access memory (RAM)), non-volatile memory (e.g., read-only memory (ROM), electrically erasable programmable read-only memory (EEPROM), flash memory), or some combination thereof. The storage device 530 may be a removable or non-removable medium and may include a machine-readable medium such as a flash drive, a magnetic disk, or any other medium that may be used to store information and/or data (for example, training data for training) and that may be accessed within the electronic device 500.

The electronic device 500 may further include additional removable/non-removable, volatile/nonvolatile storage media. Although not shown in FIG. 5, a magnetic disk drive for reading from or writing to a removable, nonvolatile magnetic disk such as a "floppy disk" and an optical disk drive for reading from or writing to a removable, nonvolatile optical disk may be provided. In these cases, each drive may be connected to a bus (not shown) by one or more data media interfaces. The memory 520 may include a computer program product 525 having one or more program modules configured to perform various methods or actions of various embodiments of the present disclosure.

The communication unit 540 implements communication with other electronic devices through a communication medium. In addition, functions of components of the electronic device 500 may be implemented by a single computing cluster or a plurality of computing machines, and these computing machines may communicate through a communication connection. Thus, the electronic device 500 may operate in a networked environment using logical connections to one or more other servers, network personal computers (PCs), or another network node.

The input device 550 may be one or more input devices such as a mouse, keyboard, trackball, etc. The output device 560 may be one or more output devices such as a display, speaker, printer, etc. The electronic device 500 may also communicate with one or more external devices (not shown) such as a storage device, a display device, or the like through the communication unit 540 as required, and communicate with one or more devices that enable a user to interact with the electronic device 500, or communicate with any device (e.g., a network card, a modem, or the like) that enables the electronic device 500 to communicate with one or more other electronic devices. Such communication may be performed via an input/output (I/O) interface (not shown).

According to example implementations of the present disclosure, a computer readable storage medium is provided, on which a computer-executable instruction is stored, wherein the computer executable instruction is executed by a processor to implement the above-described method. According to example implementations of the present disclosure, there is also provided a computer program product, which is tangibly stored on a non-transitory computer readable medium and includes computer-executable instructions that are executed by a processor to implement the method described above.

Aspects of the present disclosure are described herein with reference to flowchart and/or block diagrams of methods, apparatus, devices, and computer program products implemented in accordance with the present disclosure. It will be understood that each block of the flowcharts and/or block diagrams and combinations of blocks in the flowchart and/or block diagrams may be implemented by computer readable program instructions.

These **c**omputer readable program instructions may be provided to a processing unit of a general-purpose computer, special purpose computer, or other programmable data processing apparatus to produce a machine, such that the instructions, which execute via the processing unit of the computer or other programmable data processing apparatus, create means for implementing the functions/actions specified in one or more blocks of the flowchart and/or block diagrams. These computer readable program instructions may also be stored in a computer readable storage medium that may direct a computer, a programmable data processing apparatus, and/or other devices to function in a particular manner, such that the computer readable medium storing the instructions includes an article of manufacture including instructions which implement various aspects of the functions/actions specified in one or more blocks of the flowchart and/or block diagrams.

The computer readable program instructions may be loaded onto a computer, other programmable data processing apparatus, or other devices, causing a series of operational steps to be performed on a computer, other programmable data processing apparatus, or other devices, to produce a computer implemented process such that the instructions, when being executed on the computer, other programmable data processing apparatus, or other devices, implement the functions/actions specified in one or more blocks of the flowchart and/or block diagrams.

The flowcharts and block diagrams in the drawings illustrate the architecture, functionality, and operations of possible implementations of the systems, methods, and computer program products according to various implementations of the present disclosure. In this regard, each block in the flowchart or block diagram may represent a module, segment, or portion of instructions which includes one or more executable instructions for implementing the specified logical function(s). In some alternative implementations, the functions marked in the blocks may occur in a different order than those marked in the drawings. For example, two consecutive blocks may be executed in parallel, or they may sometimes be executed in reverse order, depending on the function involved. It should also be noted that each block in the block diagrams and/or flowcharts, as well as combinations of blocks in the block diagrams and/or flowcharts, may be implemented using a dedicated hardware-based system that performs the specified function or operations, or may be implemented using a combination of dedicated hardware and computer instructions.

Various implementations of the disclosure have been described as above, the foregoing description is exemplary, not exhaustive, and the present application is not limited to the implementations as disclosed. Many modifications and variations will be apparent to those of ordinary skill in the art without departing from the scope and spirit of the implementations as described. The selection of terms used herein is intended to best explain the principles of the implementations, the practical application, or improvements to technologies in the marketplace, or to enable those skilled in the art to understand the implementations disclosed herein.

## Claims

1. A method for user interaction, comprising:
presenting, in a feed recommendation page, a plurality of interactable interface elements associated with a predetermined event;
detecting a selection of at least one interface element in the plurality of interactable interface elements by a current user; and
in response to detecting the selection of at least one interface element in the plurality of interactable interface elements by the current user, highlighting the selected at least one interface element.

2. The method of claim 1, wherein detecting the selection of at least one interface element in the plurality of interactable interface elements comprises:
in response to a selection of at least one interface element in the plurality of interactable interface elements being received previously from the current user, detecting the selection of at least one interface element in the plurality of interactable interface elements.

3. The method of claim 1, further comprising:
in response to the selection of at least one interface element in the plurality of interactable interface elements being received previously from the current user,
highlighting the selected at least one interface element; and
disabling interactability of the plurality of interactable interface elements.

4. The method of claim 1, wherein highlighting the selected at least one interface element comprises:
in response to detecting the selection of at least one interface element in the plurality of interactable interface elements by the current user, and the selection of at least one further interface element in the plurality of interactable interface elements being received previously from the current user, providing a re-confirmation request for the selection of the at least one interface element; and
in response to detecting re-confirmation on the selection of the at least one interface element, highlighting the selected at least one interface element.

5. The method of claim 1, further comprising:
in response to detecting the selection of at least one interface element in the plurality of interactable interface elements, playing multimedia content associated with the selected at least one interface element.

6. The method of claim 1, further comprising:
presenting an entry interface element associated with the predetermined event; and
in response to receiving the selection of the entry interface element, presenting a page associated with the predetermined event.

7. The method of claim 1, wherein the plurality of interactable interface elements comprise interactable interface elements associated with respective parties involved in the predetermined event.

8. The method of claim 7, further comprising:
recording that the current user supports at least one party associated with the selected at least one interface element in the predetermined event.

9. The method of claim 1, wherein the plurality of interactable interface elements comprise interactable interface elements associated with at least two parties having a confrontation in the predetermined event;
and wherein detecting the selection of at least one interface element in the plurality of interactable interface elements comprises: detecting a selection of an interactable interface element associated with a first party of the at least two parties.

10. The method of claim 9, further comprising:
recording that the current user predicts that the first party has an advantage in the confrontation.

11. An apparatus for user interaction, comprising:
a first presentation module configured to present, in a feed recommendation page, a plurality of interactable interface elements associated with a predetermined event;
a detection module configured to detect a selection of at least one interface element in the plurality of interactable interface elements by a current user; and
a highlighting display module configured to highlight, in response to detecting the selection of at least one interface element in the plurality of interactable interface elements by the current user, the selected at least one interface element.

12. An electronic device, comprising:
at least one processing unit; and
at least one memory coupled to the at least one processing unit and storing instructions for execution by the at least one processing unit, the instructions, when executed by the at least one processing unit, causing the device to perform the method according to any of claims 1 to 10.

13. A computer readable storage medium having a computer program stored thereon which, when executed by a processor, implements the method according to any of claims 1 to 10.
